# EUROPEAN PATENT APPLICATION

(11) **EP 3 869 504 A1**
(43) Date of publication of application: **25.08.2021**
(21) Application number: 19894084.3
(22) Date of filing: 13.11.2019
(51) Int. Cl.: G10L 15/26

(54) **VOICE USER INTERFACE DISPLAY METHOD AND CONFERENCE TERMINAL**

(30) Priority: 03.12.2018 CN 201811467420
(71) Applicant: Huawei Technologies Co., Ltd., Longgang District Shenzhen, Guangdong 518129 (CN)
(72) Inventor: ZHENG, Minghui, Shenzhen, Guangdong 518129 (CN); XIAO, Jing, Shenzhen, Guangdong 518129 (CN); WANG, Geng, Shenzhen, Guangdong 518129 (CN); ZHAO, Guangyao, Shenzhen, Guangdong 518129 (CN)
(74) Representative: Gill Jennings & Every LLP
(86) International application number: PCT/CN2019/118081
(87) International publication number: WO 2020/114213

(57) **Abstract**

A voice user interface display method and a conference terminal are provided. The method includes: When voice information input by a user into the conference terminal is received, a voice of the user is collected. A user voice instruction may be obtained based on the voice information input by the user. Identity information of the user may be obtained in real time based on the voice of the user. Further, user interface information that matches the user may be displayed based on the identity information of the user, the user voice instruction, and a current conference status of the conference terminal. The method improves diversity of display of the user interface information, and improving user experience in using the conference system.

## Description

This application claims priority to Chinese Patent Application No. 201811467420.5, filed with the Chinese Patent Office on December 3, 2018 and entitled "VOICE USER INTERFACE DISPLAY METHOD AND CONFERENCE TERMINAL", which is incorporated herein by reference in its entirety.

### TECHNICAL FIELD

Embodiments of this application relate to the field of information processing technologies, and in particular, to a voice user interface display method and a conference terminal.

### BACKGROUND

With emergence of artificial intelligence, a voice interaction technology is gradually used in various industries, for example, a home smart speaker, a voice control vehicle-mounted terminal, a personal voice assistant, and a voice control conference system.

The voice control conference system is used in a public place such as a conference room, and uniqueness of the system lies in that users are variable. For example, an organizer and a participant of each conference changes. Currently, the voice control conference system presents a same user interface to all users.

However, different users participating in a conference may have different requirements in the conference. For example, for a user familiar with the conference system, the user expects to efficiently complete a voice conference control task. For a user using the conference system for the first time, the user expects to obtain more help. The current voice control conference system cannot meet different requirements of different users for the conference system.

### SUMMARY

Embodiments of this application provide a voice user interface display method and a conference terminal, to resolve a technical problem that a current voice control conference system cannot meet different requirements of different users for the conference system.

According to a first aspect, an embodiment of this application provides a voice user interface display method, including:
when voice information input by a user into a conference terminal is received, collecting a voice of the user, where the voice information includes a voice wakeup word or voice information starting with the voice wakeup word;
obtaining identity information of the user based on the voice of the user;
obtaining a user voice instruction based on the voice information;
generating user interface information that matches the user, based on the identity information of the user, a conference status of the conference terminal, and the user voice instruction; and
displaying the user interface information.

According to the voice user interface display method provided in the first aspect, when the voice information input by the user is received, the voice of the user is collected. The user voice instruction may be obtained based on the voice information input by the user. The identity information of the user may be obtained in real time based on the voice of the user. Further, the user interface information that matches the user may be displayed based on the identity information of the user, the user voice instruction, and the current conference status of the conference terminal. Because identity information of a user is considered, usage requirements of different users for a conference may be recognized, and user interface information is generated for a target user, thereby meeting different requirements of different users for a conference system, improving diversity of display of the user interface information, and improving user experience in using the conference system.

In a possible implementation, the user voice instruction is used to wake up the conference terminal, and the generating user interface information that matches the user, based on the identity information of the user, a conference status of the conference terminal, and the user voice instruction includes:
determining a type of the user based on the conference status and the identity information of the user, where the type of the user is used to indicate a degree of familiarity of the user in completing a conference control task by inputting the voice information; and
if the type of the user indicates that the user is a new user, generating conference operation prompt information and a voice input interface based on the conference status.

In a possible implementation, the method further includes:
if the type of the user indicates that the user is an experienced user, generating the voice input interface.

In a possible implementation, if the conference status indicates that the user has joined a conference, the method further includes:
obtaining role information of the user in the conference; and
the generating conference operation prompt information and a voice input interface based on the conference status includes:
generating the conference operation prompt information and the voice input interface based on the conference status and the role information.

In a possible implementation, the determining a type of the user based on the conference status and the identity information of the user includes:
obtaining a historical conference record of the user based on the identity information of the user, where the historical conference record includes at least one of the following data: latest occurrence time of different conference control tasks, a quantity of cumulative task usage times, and a task success rate; and
determining the type of the user based on the conference status and the historical conference record of the user.

In a possible implementation, the determining the type of the user based on the conference status and the historical conference record of the user includes:
obtaining data of at least one conference control task associated with the conference status in the historical conference record of the user; and
determining the type of the user based on the data of the at least one conference control task.

In a possible implementation, the determining the type of the user based on the data of the at least one conference control task includes:
for each conference control task, if data of the conference control task includes latest occurrence time, and a time interval between the latest occurrence time and current time is greater than or equal to a first preset threshold, and/or if data of the conference control task includes a quantity of cumulative task usage times, and the quantity of cumulative task usage times is less than or equal to a second preset threshold, and/or if data of the conference control task includes a task success rate, and the task success rate is less than or equal to a third preset threshold, determining that the user is a new user for the conference control task; or
for each conference control task, if at least one of latest occurrence time, a quantity of cumulative task usage times, and a task success rate that are included in data of the conference control task meets a corresponding preset condition, determining that the user is an experienced user for the conference control task, where a preset condition corresponding to the latest occurrence time is that a time interval between the latest occurrence time and current time is less than the first preset threshold, a preset condition corresponding to the quantity of cumulative task usage times is that the quantity of cumulative task usage times is greater than the second preset threshold, and a preset condition corresponding to the task success rate is that the task success rate is greater than the third preset threshold.

In a possible implementation, the user voice instruction is used to execute a conference control task after waking up the conference terminal, a running result of the user voice instruction includes a plurality of candidates, and the generating user interface information that matches the user, based on the identity information of the user, a conference status of the conference terminal, and the user voice instruction includes:
sorting the plurality of candidates based on the identity information of the user to generate the user interface information that matches the user.

In a possible implementation, the sorting the plurality of candidates based on the identity information of the user to generate the user interface information that matches the user includes:
obtaining a correlation between each candidate and the identity information of the user; and
sorting the plurality of candidates based on the correlations to generate the user interface information that matches the user.

In a possible implementation, the obtaining a user voice instruction based on the voice information includes:
performing semantic understanding on the voice information to generate the user voice instruction;
or
sending the voice information to a server; and
receiving the user voice instruction sent by the server, where the user voice instruction is generated after the server performs semantic understanding on the voice information.

In a possible implementation, the method further includes:
when the voice information input by the user into the conference terminal is received, collecting a profile picture of the user; and
the obtaining identity information of the user based on the voice of the user includes:
   obtaining the identity information of the user based on the voice and the profile picture of the user.

In a possible implementation, the obtaining the identity information of the user based on the voice and the profile picture of the user includes:
determining a position of the user relative to the conference terminal based on the voice of the user;
collecting facial information of the user based on the position of the user relative to the conference terminal; and
determining the identity information of the user based on the facial information of the user and a facial information library.

In a possible implementation, the obtaining the identity information of the user based on the voice and the profile picture of the user further includes:
obtaining voiceprint information of the user based on the voice of the user; and
determining the identity information of the user based on the voiceprint information of the user and a voiceprint information library.

According to a second aspect, an embodiment of this application provides a voice user interface display apparatus, including:
a receiving module, configured to, when voice information input by a user into a conference terminal is received, collect a voice of the user, where the voice information includes a voice wakeup word or voice information starting with the voice wakeup word;
a first obtaining module, configured to obtain identity information of the user based on the voice of the user;
a second obtaining module, configured to obtain a user voice instruction based on the voice information;
a generation module, configured to generate user interface information that matches the user, based on the identity information of the user, a conference status of the conference terminal, and the user voice instruction; and
a display module, configured to display the user interface information.

In a possible implementation, the user voice instruction is used to wake up the conference terminal, and the generation module includes:
a first determining unit, configured to determine a type of the user based on the conference status and the identity information of the user, where the type of the user is used to indicate a degree of familiarity of the user in completing a conference control task by inputting the voice information; and
a first generation unit, configured to, if the type of the user indicates that the user is a new user, generate conference operation prompt information and a voice input interface based on the conference status.

In a possible implementation, the generation module further includes:
a second generation unit, configured to, if the type of the user indicates that the user is an experienced user, generate the voice input interface.

In a possible implementation, if the conference status indicates that the user has joined a conference, the generation module further includes:
a first obtaining unit, configured to obtain role information of the user in the conference; and
the first generation unit is specifically configured to:
   generate the conference operation prompt information and the voice input interface based on the conference status and the role information.

In a possible implementation, the first determining unit includes:
a first obtaining subunit, configured to obtain a historical conference record of the user based on the identity information of the user, where the historical conference record includes at least one of the following data: latest occurrence time of different conference control tasks, a quantity of cumulative task usage times, and a task success rate; and
a determining subunit, configured to determine the type of the user based on the conference status and the historical conference record of the user.

In a possible implementation, the determining subunit is specifically configured to:
obtain data of at least one conference control task associated with the conference status in the historical conference record of the user; and
determine the type of the user based on the data of the at least one conference control task.

In a possible implementation, the determining subunit is specifically configured to:
for each conference control task, if data of the conference control task includes latest occurrence time, and a time interval between the latest occurrence time and current time is greater than or equal to a first preset threshold, and/or if data of the conference control task includes a quantity of cumulative task usage times, and the quantity of cumulative task usage times is less than or equal to a second preset threshold, and/or if data of the conference control task includes a task success rate, and the task success rate is less than or equal to a third preset threshold, determine that the user is a new user for the conference control task; or
for each conference control task, if at least one of latest occurrence time, a quantity of cumulative task usage times, and a task success rate that are included in data of the conference control task meets a corresponding preset condition, determine that the user is an experienced user for the conference control task, where a preset condition corresponding to the latest occurrence time is that a time interval between the latest occurrence time and current time is less than the first preset threshold, a preset condition corresponding to the quantity of cumulative task usage times is that the quantity of cumulative task usage times is greater than the second preset threshold, and a preset condition corresponding to the task success rate is that the task success rate is greater than the third preset threshold.

In a possible implementation, the user voice instruction is used to execute a conference control task after waking up the conference terminal, a running result of the user voice instruction includes a plurality of candidates, and the generation module includes:
a third generation unit, configured to sort the plurality of candidates based on the identity information of the user to generate the user interface information that matches the user.

In a possible implementation, the third generation unit includes:
a second obtaining subunit, configured to obtain a correlation between each candidate and the identity information of the user; and
a generation subunit, configured to sort the plurality of candidates based on the correlations to generate the user interface information that matches the user.

In a possible implementation, the second obtaining module is specifically configured to:
perform semantic understanding on the voice information to generate the user voice instruction;
or
send the voice information to a server; and
receive the user voice instruction sent by the server, where the user voice instruction is generated after the server performs semantic understanding on the voice information.

In a possible implementation, the receiving module is further configured to:
when the voice information input by the user into the conference terminal is received, collect a profile picture of the user; and
the first obtaining module is specifically configured to obtain the identity information of the user based on the voice and the profile picture of the user.

In a possible implementation, the first obtaining module includes:
a second determining unit, configured to determine a position of the user relative to the conference terminal based on the voice of the user;
a collection unit, configured to collect facial information of the user based on the position of the user relative to the conference terminal; and
a third determining unit, configured to determine the identity information of the user based on the facial information of the user and a facial information library.

In a possible implementation, the first obtaining module further includes:
a second obtaining unit, configured to obtain voiceprint information of the user based on the voice of the user; and
a fourth determining unit, configured to determine the identity information of the user based on the voiceprint information of the user and a voiceprint information library.

According to a third aspect, an embodiment of this application provides a conference terminal, including a processor, a memory, and a display.

The memory is configured to store program instructions.

The display is configured to display user interface information under control of the processor.

The processor is configured to invoke and execute the program instructions stored in the memory, and when the processor executes the program instructions stored in the memory, the conference terminal is configured to perform the method in any implementation of the first aspect.

According to a fourth aspect, an embodiment of this application provides a chip system. The chip system includes a processor, and may further include a memory, and the chip system is configured to implement the method in any implementation of the first aspect. The chip system may include a chip, or may include a chip and another discrete component.

According to a fifth aspect, an embodiment of this application provides a program. When executed by a processor, the program is used to perform the method in any implementation of the first aspect.

According to a sixth aspect, an embodiment of this application provides a computer program product including instructions. When the computer program product is run on a computer, the computer is enabled to perform the method in any implementation of the first aspect.

According to a seventh aspect, an embodiment of this application provides a computer-readable storage medium. The computer-readable storage medium stores instructions. When the instructions are run on a computer, the computer is enabled to perform the method in any implementation of the first aspect.

### BRIEF DESCRIPTION OF DRAWINGS

FIG. 1 is a schematic structural diagram of a conference system to which an embodiment of this application is applicable;
FIG. 2 is a schematic diagram of a software module in a conference system according to an embodiment of this application;
FIG. 3 is a flowchart of a voice user interface display method according to Embodiment 1 of this application;
FIG. 4 is a flowchart of a voice user interface display method according to Embodiment 2 of this application;
FIG. 5 is a schematic diagram of a voice user interface in a scenario according to Embodiment 2 of this application;
FIG. 6 is a schematic diagram of a voice user interface in another scenario according to Embodiment 2 of this application;
FIG. 7(a) to FIG. 7(f) are a schematic diagram of a prompt area according to Embodiment 2 of this application;
FIG. 8 is a schematic diagram of a historical conference record according to Embodiment 2 of this application;
FIG. 9 is a schematic diagram of a voice user interface in a scenario according to Embodiment 3 of this application;
FIG. 10 is a schematic diagram of a voice user interface in another scenario according to Embodiment 3 of this application;
FIG. 11 is a schematic diagram of a voice user interface in still another scenario according to Embodiment 3 of this application;
FIG. 12 is a schematic structural diagram of a voice user interface display apparatus according to an embodiment of this application; and
FIG. 13 is a schematic structural diagram of a conference terminal according to an embodiment of this application.

### DESCRIPTION OF EMBODIMENTS

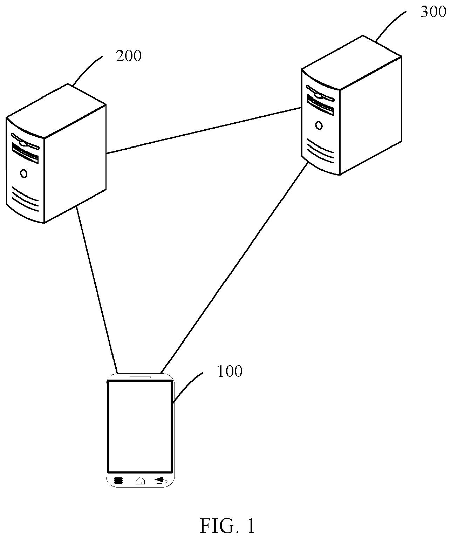

FIG. 1 is a schematic structural diagram of a conference system to which an embodiment of this application is applicable. As shown in FIG. 1, the conference system may include a conference terminal 100 and a server. Optionally, the server may include at least one of a local server 200 and a remote server 300. The remote server 300 may be a conventional server or a cloud server. The conference terminal 100 may communicate with the local server 200, the conference terminal 100 may communicate with the remote server 300, and the local server 200 may communicate with the remote server 300. A communication mode may be wired communication or wireless communication. The conference terminal 100 usually has a limited computing capability, but the server has a powerful computing capability. Therefore, communication between the conference terminal 100 and the server may compensate for and assist in data processing of the conference terminal 100.

Each device in the conference system may be pre-installed with a software program or an application (Application, APP), to implement a voice interaction task between a user and the conference system by using a voice recognition technology and a semantic understanding technology.

It should be noted that a quantity of conference terminals 100 and a quantity of servers in the conference system are not limited in this embodiment of this application.

The conference terminal 100 may include a sound collection device, a sound playing device, a photographing device, a memory, a processor, and the like. The sound collection device is configured to obtain a voice input by the user. The photographing device may collect an image or a video in a conference. The sound playing device may play a voice part in a result of the voice interaction task. Optionally, the conference terminal 100 may further include a transceiver. The transceiver is configured to communicate with another device, and transmit data or instructions. Optionally, the conference terminal 100 may further include a display. The display is configured to display a displayable part in the result of the voice interaction task. Optionally, if the conference terminal 100 does not include a display, the conference terminal 100 may further perform data transmission with an external display device, so that the display device displays the displayable part in the result of the voice interaction task.

The following uses an example to describe the voice interaction task.

In some implementations or scenarios of this application, the voice interaction task may also be referred to as a voice task, a conference control task, or the like. A function implemented by the voice interaction task is not limited in the embodiments of this application.

For example, the user says a voice wakeup word "Hi, Scotty" to the conference terminal in a listening state. The voice interaction task may be waking up the conference terminal. After the task is performed, the conference terminal changes from the listening state to a standby state to wait for the user to continue to input a voice. In this case, a voice input window may be displayed on the display of the conference terminal.

For another example, the user says "Hi, Scotty, please call user A" to the conference terminal in a conference. The voice interaction task may be waking up the conference terminal and then initiating a call. After the task is performed, the conference terminal may be woken up and call user A. In this case, an interface of calling user A may be displayed on the display of the conference terminal.

It should be noted that a shape and a product type of the conference terminal 100 are not limited in this embodiment of this application.

It should be noted that an implementation of each part in the conference terminal 100 is not limited in this embodiment of this application. For example, the sound collection device may include a microphone or a microphone array. The sound playing device may include a loudspeaker or a speaker. The photographing device may be a camera with different pixels.

The following describes the conference system from a perspective of software.

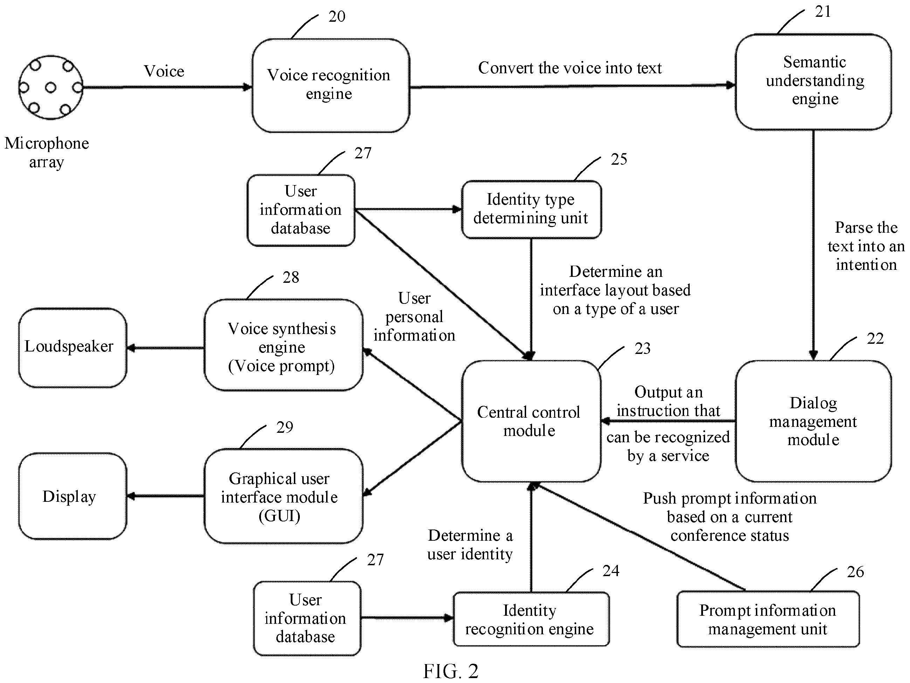

For example, FIG. 2 is a schematic diagram of a software module in the conference system according to an embodiment of this application. A microphone array, a loudspeaker, and a display are hardware modules.

As shown in FIG. 2, a voice input by a user may be obtained by using the microphone array. For example, the voice may be "Hi, Scotty, please call user A". A voice recognition engine 20 may process a voice, and convert the voice into text. A semantic understanding engine 21 may obtain a meaning included in the text, and parse the text to obtain an intention. In the example, the user intends to call user A. Then, a dialog management module 22 outputs an instruction that can be recognized and executed by a service. It should be noted that, in some implementations or scenarios of this application, the instruction may also be referred to as a voice instruction, a user voice instruction, a conference instruction, a conference control instruction, or the like. After obtaining the instruction, a central control module 23 executes the instruction to obtain an execution result. If the execution result includes a part that needs to be played, the part is processed by a voice synthesis engine 28, and is played by the loudspeaker. If the execution result includes a part that needs to be displayed, the part is processed by a graphical user interface module 29, and is displayed by the display.

In this embodiment of this application, when the instruction is executed, a type of the user, a user identity, and a conference status may be all considered. By executing the instruction based on the foregoing factors, a running result of the instruction that matches the type of the user, the user identity, and the conference status may be obtained. This improves interface displaying flexibility and user experience.

Specifically, an identity recognition engine 24 may obtain identity information of the user from a user information database 27 by using at least one of a sound source localization technology, a sound source tracking technology, a voiceprint recognition technology, a facial recognition technology, a lip movement recognition technology, and the like. The identity recognition engine 24 outputs the identity information of the user to the central control module 23.

An identity type determining unit 25 may determine the type of the user. The type of the user is used to indicate a degree of familiarity of the user in completing a conference control task by inputting a voice. It should be noted that, for different conference control tasks, a same user may have different types. For example, if user B often organizes a conference, user B may be an experienced user for conference control tasks such as joining the conference, initiating the conference, and adding a participant to the conference. However, if user B only organizes a conference and does not participate in a subsequent conference, user B may be a new user for a conference control task such as ending the conference, sharing a screen in the conference, or viewing a site in the conference. The identity type determining unit 25 may outputs the type of the user to the central control module 23.

A prompt information management unit 26 may push different prompt information to the central control module 23 based on the conference status.

Finally, the central control module 23 executes the instruction based on outputs of the identity recognition engine 24, the identity type determining unit 25, the prompt information management unit 26, and the dialog management module 22 to obtain the execution result.

It should be noted that the conference system in this embodiment of this application may implement functions implemented by all modules shown in FIG. 2. However, specific division into modules is not limited, and division into the modules and names of the modules in FIG. 2 are merely an example. In addition, a location of disposing each module in FIG. 2 is not limited in this embodiment of this application. For example, the voice recognition engine 20, the semantic understanding engine 21, the dialog management module 22, the identity type determining unit 25, and the identity recognition engine 24 may be disposed on the conference terminal, the local server, or the remote server. The central control module 23, the voice synthesis engine 28, and the graphical user interface module 29 may be disposed on the conference terminal.

The following describes the technical solutions of this application in detail by using specific embodiments. The following several specific embodiments may be combined with each other, and same or similar concepts or processes may not be described in detail in some embodiments.

It should be noted that, in the specification, claims, and accompanying drawings of this application, the terms "first", "second", "third", "fourth", and so on (if existent) are intended to distinguish between similar objects but do not necessarily indicate a specific order or sequence.

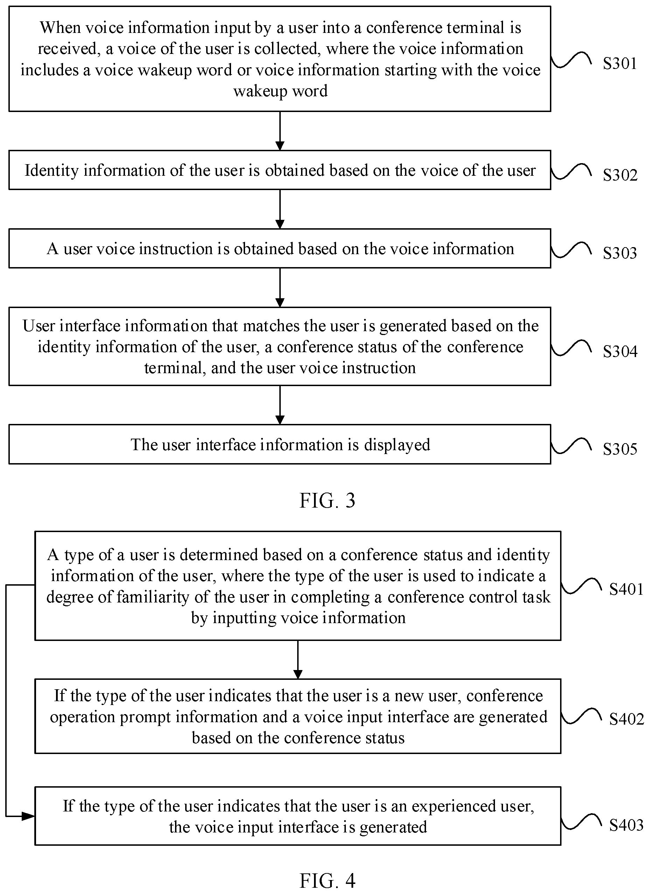

FIG. 3 is a flowchart of a voice user interface display method according to Embodiment 1 of this application. The voice user interface display method provided in this embodiment may be performed by a voice user interface display apparatus or a conference terminal. As shown in FIG. 3, the voice user interface display method provided in this embodiment may include the following steps.

S301: When voice information input by a user into the conference terminal is received, a voice of the user is collected.

The voice information includes a voice wakeup word or voice information starting with the voice wakeup word.

Specifically, before performing voice interaction with the conference terminal, the user needs to first wake up the conference terminal by using the voice wakeup word. The voice information input by the user may include only the voice wakeup word, for example, "Hi, Scotty". Alternatively, the voice information may be voice information starting with the voice wakeup word, for example, "Hi, Scotty, please call user A", "Hi, Scotty, please share the screen of conference room B", or "Hi, Scotty, I want to end the conference". A sound collection device is disposed on the conference terminal. When the user inputs the voice information into the conference terminal, the conference terminal may collect the voice of the user.

Optionally, a photographing device may be disposed on the conference terminal. When the user inputs the voice information into the conference terminal, the conference terminal may collect a profile picture of the user.

It should be noted that an implementation of the voice wakeup word is not limited in this embodiment.

S302: Identity information of the user is obtained based on the voice of the user.

Specifically, when the voice information input by the user is received, the voice of the user is collected. Because the voice of the user is very recognizable information, the identity information of the user may be obtained in real time by using the voice of the user, thereby improving timeliness of obtaining the identity information of the user.

Then, whether the user is an authorized user may be determined based on the identity information of the user, and a personalized conference display interface may be customized for the user. For example, different interfaces may be displayed based on different display styles for users in different departments.

Optionally, the identity information of the user may include at least one of the following:
name, gender, age, graduation date, work experience, onboarding date, department, employee ID, office site number, fixed-line phone number, mobile phone number, whether the user is on a business trip, business trip destination, and hobbies.

Optionally, if the profile picture of the user is further collected when the voice information input by the user into the conference terminal is received, that identity information of the user is obtained based on the voice of the user in S302 may include:
obtaining the identity information of the user based on the voice and the profile picture of the user.

Specifically, the profile picture of the user is also very recognizable information. The identity information of the user is obtained based on both the voice and the profile picture of the user. This further improves accuracy of the identity information of the user, especially in a scenario in which a large quantity of users use the conference terminal and users change frequently, for example, a large enterprise with a large quantity of employees.

S303: A user voice instruction is obtained based on the voice information.

Specifically, after obtaining the voice information input by the user, the conference terminal may perform voice recognition and semantic understanding on the voice, to obtain the user voice instruction. The user voice instruction may be executed by the conference terminal.

It should be noted that an execution sequence of S302 and S303 is not limited in this embodiment. For example, S302 may be performed before or after S303, or S302 and S303 may be performed simultaneously.

S304: User interface information that matches the user is generated based on the identity information of the user, a conference status of the conference terminal, and the user voice instruction.

S305: The user interface information is displayed.

Specifically, user interface information that matches the user may be different based on different identity information of the user, different conference statuses, and different user voice instructions.

The following provides description by using an example.

In an example, the graduation date of a user is July, 2018, and the onboarding date of the user is August, 2018. Currently, it is November, 2018. It indicates that the user is a new employee who has just worked for three months. It is assumed that the conference terminal is in a listening state. The user voice instruction is used to wake up the conference terminal. Therefore, after the conference terminal switches from the listening state to a standby state, displayed user interface information that matches the user may include prompt information related to entering a conference.

In another example, the onboarding date of a user is 2014. Currently, it is 2018. It indicates that the user has worked for four years. It may be determined that the user is familiar with a conference procedure. In a same scenario as the foregoing example, when the conference terminal switches from the listening state to the standby state, no prompt information may be displayed, and only a voice input window is displayed.

The conference status is used to indicate an execution stage and an execution status of a conference or the conference terminal. Specific classification of the conference status is not limited in this embodiment.

Optionally, the conference status may include at least one of the following: having not joined a conference, having joined a conference, sharing a screen in a conference, viewing a site in a conference, and the like.

It can be learned that, according to the voice user interface display method provided in this embodiment, when the voice information input by the user into the conference terminal is received, the voice of the user is collected. The user voice instruction may be obtained based on the voice information input by the user. The identity information of the user may be obtained in real time based on the voice of the user. Further, the user interface information that matches the user may be displayed based on the identity information of the user, the user voice instruction, and the current conference status of the conference terminal. Because identity information of a user is considered, usage requirements of different users for a conference may be recognized, and user interface information is generated for a target user, thereby meeting different requirements of different users for a conference system, improving diversity of display of the user interface information, and improving user experience in using the conference system.

Optionally, in S302, that identity information of the user is obtained based on the voice of the user may include:
obtaining voiceprint information of the user based on the voice of the user; and
determining the identity information of the user based on the voiceprint information of the user and a voiceprint information library.

Specifically, a voiceprint recognition technology or the like may be used to obtain the voiceprint information of the user, and then a match is searched in the voiceprint information library, so as to determine the identity information of the user.

Optionally, the voiceprint information library may be periodically updated.

Optionally, the obtaining the identity information of the user based on the voice and the profile picture of the user may include:
determining a position of the user relative to the conference terminal based on the voice of the user;
collecting facial information of the user based on the position of the user relative to the conference terminal; and
determining the identity information of the user based on the facial information of the user and a facial information library.

Specifically, the position of the user relative to the conference terminal may be determined by using a sound source tracking technology, a sound source localization technology, a lip movement recognition technology, or the like. Further, in an image or a video collected by the photographing device, a facial recognition technology or the like is used to collect the facial information of the user based on the position of the user relative to the conference terminal. Then, a match is searched in the facial information library based on the facial information of the user, to determine the identity information of the user.

Optionally, the facial information library may be periodically updated.

Optionally, the position of the user relative to the conference terminal may include a direction of the user relative to the conference terminal.

Optionally, in S302, the obtaining the identity information of the user based on the voice and the profile picture of the user may further include:
obtaining voiceprint information of the user based on the voice of the user; and
determining the identity information of the user based on the voiceprint information of the user and a voiceprint information library.

In this implementation, after the voiceprint information of the user is obtained, a match is searched in the voiceprint information library, to determine the identity information of the user. Because the identity information of the user is determined based on both the voiceprint information and facial matching of the user, accuracy of the identity information of the user is further improved.

Optionally, in S303, that a user voice instruction is obtained based on the voice information includes:
performing semantic understanding on the voice information to generate the user voice instruction;
or
sending the voice information to a server; and
receiving the user voice instruction sent by the server, where the user voice instruction is generated after the server performs semantic understanding on the voice information.

Specifically, in an implementation, the conference terminal may perform voice recognition and semantic understanding to generate the user voice instruction based on the voice information input by the user. A processing process of obtaining the user voice instruction is simplified.

In another implementation, data transmission may be performed between the conference terminal and the server, and the server performs voice recognition and semantic understanding on the voice information input by the user. The server returns the user voice instruction to the conference terminal. This reduces a hardware configuration of the conference terminal and is easy to implement.

This embodiment provides the voice user interface display method, including: when the voice information input by the user into the conference terminal is received, collecting the voice of the user; obtaining the identity information of the user based on the voice of the user; obtaining the user voice instruction based on the voice information; generating the user interface information that matches the user, based on the identity information of the user, the conference status of the conference terminal, and the user voice instruction; and displaying the user interface information. According to the voice user interface display method provided in this embodiment, when the voice information input by the user is received, the voice of the user is collected. The identity information of the user may be obtained in real time based on the voice of the user. Because identity information of a user, a conference status of the conference terminal, and a voice interaction task that the user expects to perform are considered, usage requirements of different users for a conference may be recognized, and user interface information is generated for a target user, thereby meeting different requirements of different users for a conference system, improving diversity of display of the user interface information, and improving user experience in using the conference system.

FIG. 4 is a flowchart of a voice user interface display method according to Embodiment 2 of this application. In the voice user interface display method provided in this embodiment, based on the embodiment shown in FIG. 3, an implementation of the voice user interface display method in a scenario in which the user voice instruction is used to wake up the conference terminal is provided.

As shown in FIG. 4, the user voice instruction is used to wake up the conference terminal. In S304, that user interface information that matches the user is generated based on the identity information of the user, a conference status of the conference terminal, and the user voice instruction may include the following steps.

S401: A type of the user is determined based on the conference status and the identity information of the user.

The type of the user is used to indicate a degree of familiarity of the user in completing a conference control task by inputting the voice information.

S402: If the type of the user indicates that the user is a new user, conference operation prompt information and a voice input interface are generated based on the conference status.

S403: If the type of the user indicates that the user is an experienced user, the voice input interface is generated.

Specifically, for a same user, if the conference status is different, the degree of familiarity of the user in completing the conference control task by inputting the voice information may be different. When it is determined that the user is a new user, the conference operation prompt information and the voice input interface may be generated. The conference operation prompt information may provide good conference guidance for the new user, thereby improving efficiency and accuracy of inputting a voice by the new user, and improving a success rate of completing the conference control task by the new user. This meets a conference requirement of the new user. When it is determined that the user is an experienced user, no prompt information is required. In this case, only the voice input interface is generated. The user can complete the conference control task by directly inputting a voice. This saves time for displaying the conference operation prompt information and skips a step for displaying the conference operation prompt information, and skips a process for guidance, thereby improving efficiency of completing the conference control task by the experienced user. This meets a conference requirement of the experienced user, and improves user experience.

The following provides description by using a specific example.

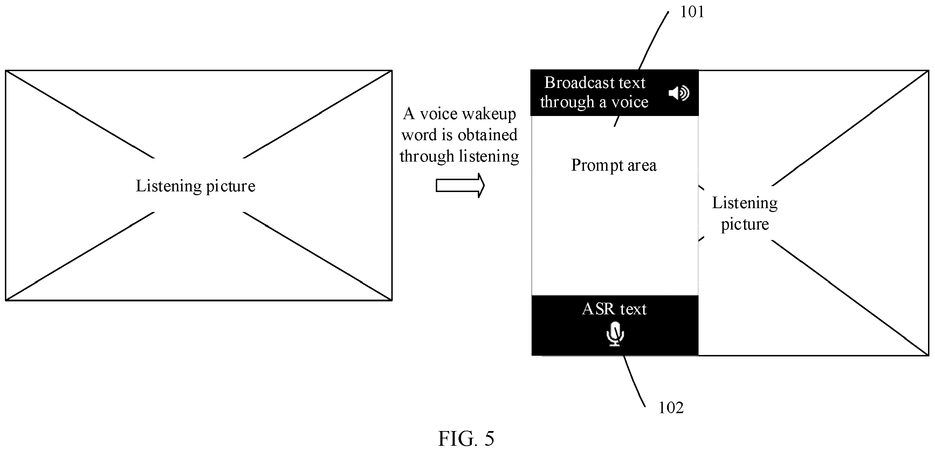

Optionally, in an example, FIG. 5 is a schematic diagram of a voice user interface in a scenario according to Embodiment 2 of this application. This is applicable to a new user.

As shown on the left side of FIG. 5, a currently displayed voice user interface is a listening picture. It should be noted that the listening picture may be different in different conference statuses. The listening picture is not limited in this example. After the conference terminal receives the voice wakeup word, as shown on the right side of FIG. 5, the voice user interface may include a prompt area 101 and a voice input interface 102. In the prompt area 101, the conference operation prompt information may be displayed.

It should be noted that a display location, display content, and a display style of the prompt area 101 and the voice input interface 102 are not limited in this example.

Optionally, the prompt area 101 may be displayed in a noticeable area of the voice user interface, so that the new user can easily see the prompt area 101.

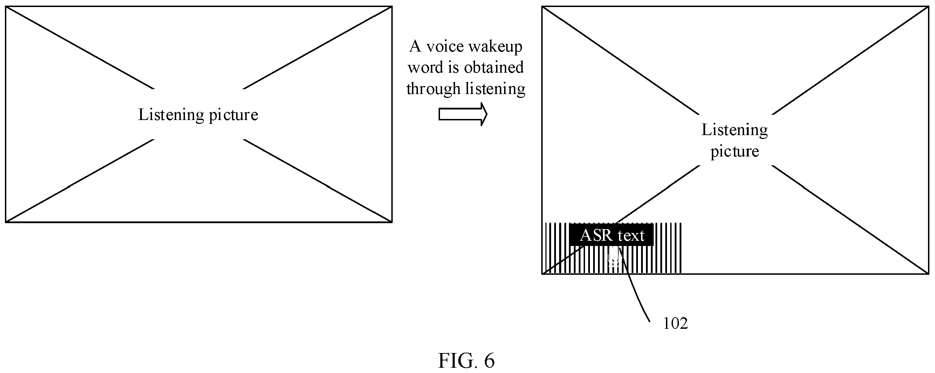

Optionally, in another example, FIG. 6 is a schematic diagram of a voice user interface in another scenario according to Embodiment 2 of this application. This is applicable to an experienced user.

As shown on the left side of FIG. 6, a currently displayed voice user interface is a listening picture. For the listening picture, refer to the description in FIG. 5. After the conference terminal receives the voice wakeup word, as shown on the right side of FIG. 6, the voice user interface may include the voice input interface 102. Compared with the voice user interface on the right side of FIG. 5, for the experienced user, the voice user interface in this example is simpler without redundant prompt information, thereby improving conference experience of the experienced user.

Optionally, according to the voice user interface display method provided in this embodiment, if the conference status indicates that the user has joined a conference, the method may further include:
obtaining role information of the user in the conference.

Correspondingly, in S402, that conference operation prompt information and a voice input interface are generated based on the conference status may include:
generating the conference operation prompt information and the voice input interface based on the conference status and the role information.

Specifically, for a conference, there may be a plurality of conference statuses in an entire process from creating the conference to ending the conference. Different conference statuses may relate to different conference control tasks. When the user has joined the conference, the user may have a plurality of roles in the conference, for example, a conference host and a non-conference host. Role classification for the user in the conference is not limited in this embodiment.

Therefore, based on different conference statuses, if the conference status indicates that the user has joined the conference, the conference operation prompt information and the voice input interface are generated based on the conference status and the role information of the user in the conference, thereby further improving a matching degree between the prompt information and the user, and improving user experience in using the conference system.

The following provides description by using a specific example.

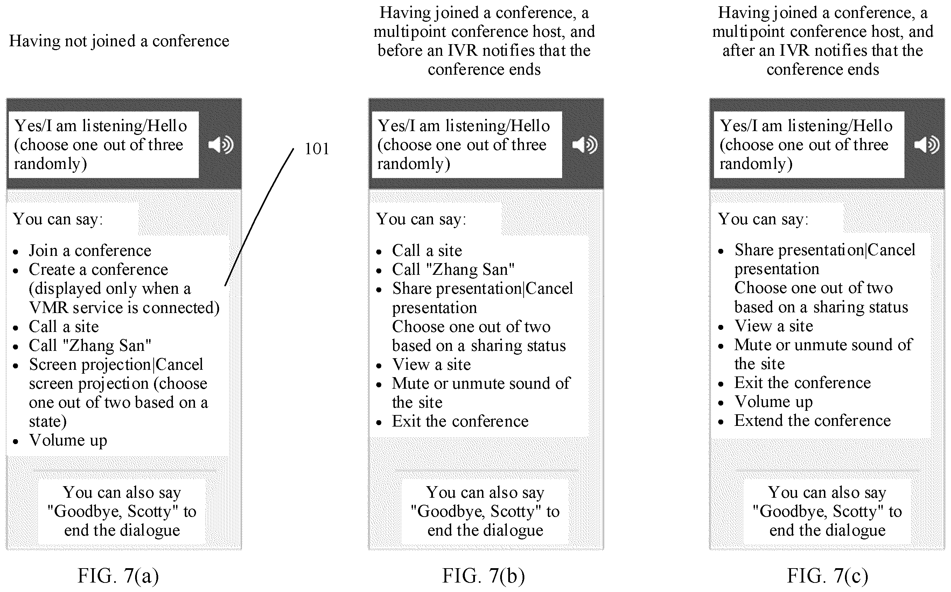

FIG. 7(a) to FIG. 7(f) are a schematic diagram of the prompt area according to Embodiment 2 of this application. Based on the example shown in FIG. 5, the following describes the prompt area based on different conference statuses and different role information.

As shown in FIG. 7(a), the conference status is having not joined a conference. The conference operation prompt information may include information included in the prompt area 101.

As shown in FIG. 7(b), the conference status is having joined a conference, a multipoint conference, and at a time point before an interactive voice response (Interactive Voice Response, IVR) notifies that the conference is about to end. The role information of the user in the conference is a conference host. The conference operation prompt information may include information included in the prompt area.

By comparing the scenario (a) with the scenario (b), when the user has not joined the conference, a related conference control task may include "joining the conference", and does not include "exiting the conference". However, if the user has joined the conference, a related conference control task may include "exiting the conference", and does not include "joining the conference".

As shown in FIG. 7(c), the conference status is having joined a conference, a multipoint conference, and at a time point after an IVR notifies that the conference is about to end. The role information of the user in the conference is a conference host. The conference operation prompt information may include information included in the prompt area.

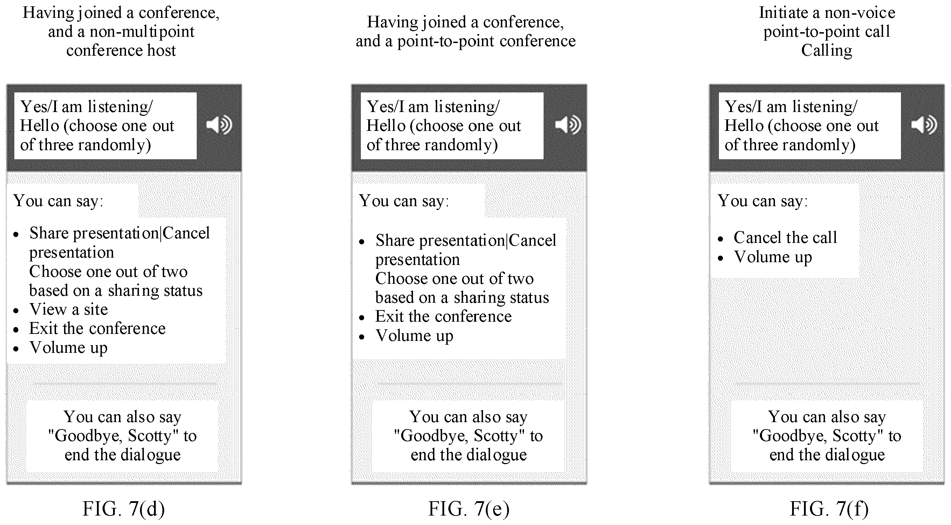

As shown in FIG. 7(d), the conference status is having joined a conference and a multipoint conference. The role information of the user in the conference is a non-conference host. The conference operation prompt information may include information included in the prompt area.

As shown in FIG. 7(e), the conference status is having joined a conference and a point-to-point conference. Because the conference is a point-to-point conference, no role information of the user in the conference is related. The conference operation prompt information may include information included in the prompt area.

As shown in FIG. 7(f), the conference status is initiating a point-to-point call in a non-voice way and calling. The conference operation prompt information may include information included in the prompt area.

Optionally, in S401, that a type of the user is determined based on the conference status and the identity information of the user may include:
obtaining a historical conference record of the user based on the identity information of the user, where the historical conference record includes at least one of the following data: latest occurrence time of different conference control tasks, a quantity of cumulative task usage times, and a task success rate; and
determining the type of the user based on the conference status and the historical conference record of the user.

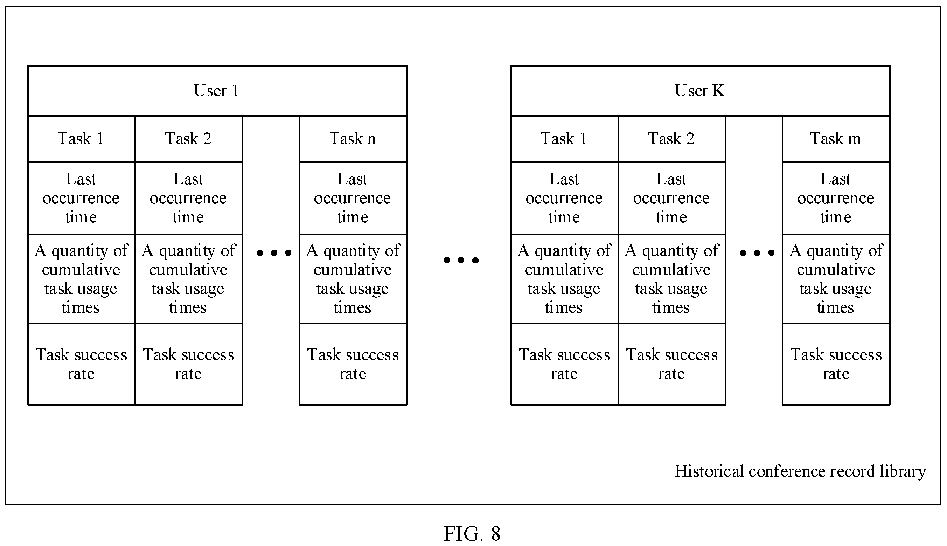

The following provides description with reference to FIG. 8.

FIG. 8 is a schematic diagram of the historical conference record according to Embodiment 2 of this application. As shown in FIG. 8, a historical conference record library stores the historical conference record of the user. For a specific user, for example, a user 1, a historical conference record of the user 1 includes data of a plurality of conference control tasks, for example, a task 1 to a task n. Each task of the user 1 may include at least one of the following data: latest occurrence time, a quantity of cumulative task usage times, and a task success rate. That the latest occurrence time is closer to current time, the quantity of cumulative task usage times is larger, and the task success rate is higher indicates that the user is more familiar with the conference control task. On the contrary, that the latest occurrence time is farther from current time, the quantity of cumulative task usage times is smaller, and the task success rate is lower indicates that the user is less familiar with the conference control task. The type of the user may be determined based on the conference status and the historical conference record of the user.

It should be noted that a manner of recording data in the historical conference record library is not limited in this embodiment. For example, the data may be stored in a form of a table.

Optionally, the historical conference record library may be periodically updated.

Optionally, the determining the type of the user based on the conference status and the historical conference record of the user may include:
obtaining data of at least one conference control task associated with the conference status in the historical conference record of the user; and
determining the type of the user based on the data of the at least one conference control task.

Specifically, for a conference, there may be a plurality of conference statuses in an entire process from creating the conference to ending the conference. Different conference statuses may relate to different conference control tasks. The type of the user is determined based on the data of the at least one conference control task associated with the conference status, thereby further improving accuracy of determining the type of the user.

Optionally, the determining the type of the user based on the data of the at least one conference control task may include:
for each conference control task, if data of the conference control task includes latest occurrence time, and a time interval between the latest occurrence time and current time is greater than or equal to a first preset threshold, and/or if data of the conference control task includes a quantity of cumulative task usage times, and the quantity of cumulative task usage times is less than or equal to a second preset threshold, and/or if data of the conference control task includes a task success rate, and the task success rate is less than or equal to a third preset threshold, determining that the user is a new user for the conference control task.

Specifically, for a condition that it is determined that the user is a new user for a conference control task, as long as data such as one of latest occurrence time, a quantity of cumulative task usage times, and a task success rate meets the corresponding condition that user is a new user, it may be determined that the user is a new user.

For example, if the data of the conference control task includes the last occurrence time and the task success rate, in an implementation, the time interval between the last occurrence time and the current time is greater than or equal to the first preset threshold, and the task success rate is greater than the third preset threshold. Because the latest occurrence time meets the corresponding condition that the user is a new user, even if the task success rate does not meet the corresponding condition that the user is a new user, it is also determined that the user is a new user.

It should be noted that specific values of the first preset threshold, the second preset threshold, and the third preset threshold are not limited in this embodiment.

It should be noted that, if there are various types of data used to determine that the user is a new user, an execution sequence of determining whether various types of data meet the corresponding condition that the user is a new user is not limited.

Optionally, the determining the type of the user based on the data of the at least one conference control task may include:
for each conference control task, if at least one of latest occurrence time, a quantity of cumulative task usage times, and a task success rate that are included in data of the conference control task meets a corresponding preset condition, determining that the user is an experienced user for the conference control task. A preset condition corresponding to the latest occurrence time is that a time interval between the latest occurrence time and current time is less than the first preset threshold, a preset condition corresponding to the quantity of cumulative task usage times is that the quantity of cumulative task usage times is greater than the second preset threshold, and a preset condition corresponding to the task success rate is that the task success rate is greater than the third preset threshold.

Specifically, for a condition that it is determined that the user is an experienced user for a conference control task, only when all data such as latest occurrence time, a quantity of cumulative task usage times, and a task success rate meets the corresponding condition that the user is an experienced user, it may be determined that the user is an experienced user.

For example, if the data of the conference control task includes the last occurrence time and the task success rate, only when the time interval between the latest occurrence time and the current time is less than the first preset threshold, and the task success rate is greater than the third preset threshold, it may be determined that the user is an experienced user for the conference control task.

For another example, if the data of the conference control task includes the last occurrence time, the quantity of cumulative task usage times, and the task success rate, only when the time interval between the latest occurrence time and the current time is less than the first preset threshold, the quantity of cumulative task usage times is greater than the second preset threshold, and the task success rate is greater than the third preset threshold, it may be determined that the user is an experienced user for the conference control task.

It should be noted that, if there are various types of data used to determine that the user is an experienced user, an execution sequence of determining whether various types of data meet the corresponding condition that the user is an experienced user is not limited.

This embodiment provides the voice user interface display method, and the type of the user is determined based on the conference status and the identity information of the user. If the type of the user indicates that the user is a new user, the conference operation prompt information and the voice input interface are generated based on the conference status. If the type of the user indicates that the user is an experienced user, the voice input interface is generated. For a new user, the conference operation prompt information may provide good guidance for the new user, thereby improving efficiency and accuracy of inputting a voice by the new user, and improving a success rate of completing the conference control task. For an experienced user, this avoids displaying redundant prompt information, and skips a process for guidance, thereby improving efficiency of completing the conference control task by the experienced user. This meets different requirements of different users for the conference system and improves user experience.

Embodiment 3 of this application further provides a voice user interface display method. Based on the embodiment shown in FIG. 3, this embodiment provides an implementation of the voice user interface display method in a scenario in which the user voice instruction is used to execute the conference control task after waking up the conference terminal.

In this embodiment, the user voice instruction is used to execute the conference control task after waking up the conference terminal. If a running result of the user voice instruction includes a plurality of candidates, in S304, that user interface information that matches the user is generated based on the identity information of the user, a conference status of the conference terminal, and the user voice instruction may include:
sorting the plurality of candidates based on the identity information of the user to generate the user interface information that matches the user.

The following provides description by using an example.

It is assumed that a voice input by a user 1 is that "Hi, Scotty, call Li Jun". The generated user voice instruction is used to wake up the conference terminal, and then call Li Jun. However, there are a plurality of employees called Li Jun in the company. In addition, because the user inputs the voice, there are a plurality of names that have a same pronunciation as "Li Jun". In this case, the running result of the user voice instruction includes a plurality of candidates. The plurality of candidates need to be sorted based on identity information of the user to generate user interface information that matches the user. Therefore, a matching degree between a displayed candidate result and the user is improved, and user experience is improved.

Optionally, the sorting the plurality of candidates based on the identity information of the user to generate the user interface information that matches the user may include:
obtaining a correlation between each candidate and the identity information of the user; and
sorting the plurality of candidates based on the correlations to generate the user interface information that matches the user.

The following provides description by using an example.

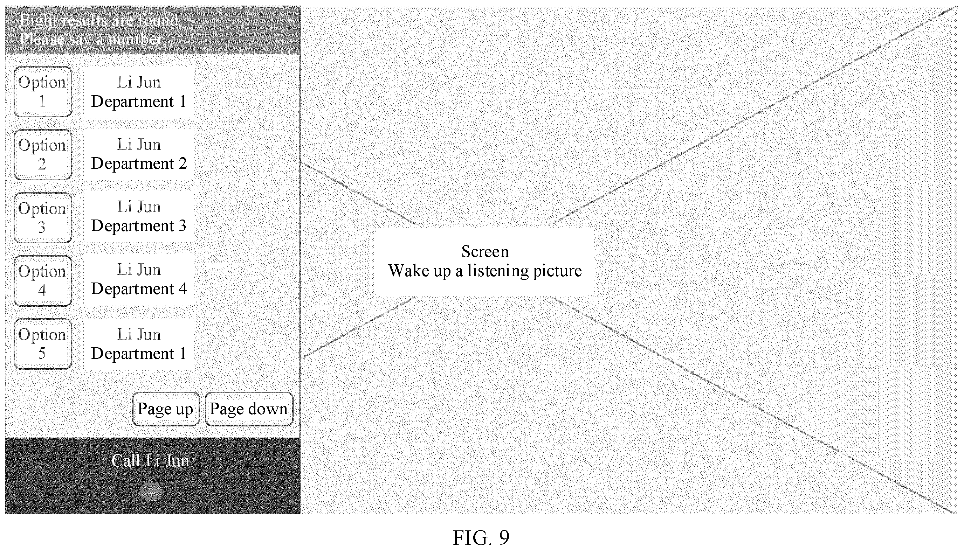

Optionally, in an example, FIG. 9 is a schematic diagram of the voice user interface in a scenario according to Embodiment 3 of this application. As shown in FIG. 9, a user 1 wants to call Li Jun. The user 1 is in a department 1. First, it is considered that names that have a same pronunciation have a higher correlation, and users whose names have the same pronunciation as "Li Jun" are selected, followed by users with different names. For a plurality of employees called "Li Jun", an employee who is called "Li Jun" and is in the same department as the user 1 is ranked ahead based on a correlation between departments, to obtain a final sequence.

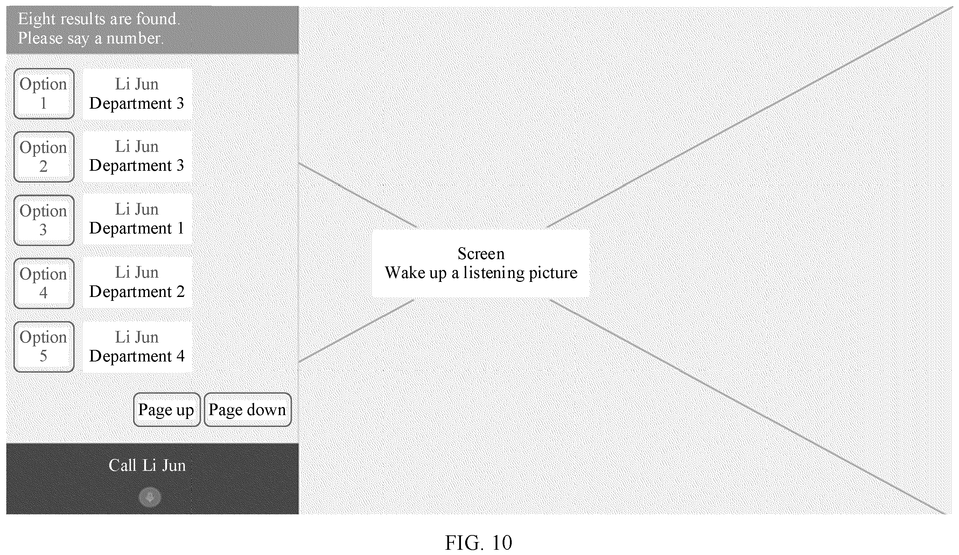

Optionally, in another example, FIG. 10 is a schematic diagram of the voice user interface in another scenario according to Embodiment 3 of this application. As shown in FIG. 10, a user 2 wants to call Li Jun. The user 2 is in a department 3. First, it is considered that employees in a same department have a higher correlation, and users in the same department as the user 2 are selected, followed by users with different names. Then, for a plurality of candidates in the department 3, users whose names have the same pronunciation as "Li Jun" are ranked ahead to obtain a final sequence.

Optionally, if there is only one running result of the user voice instruction, user interface information is directly displayed.

The following provides description by using an example.

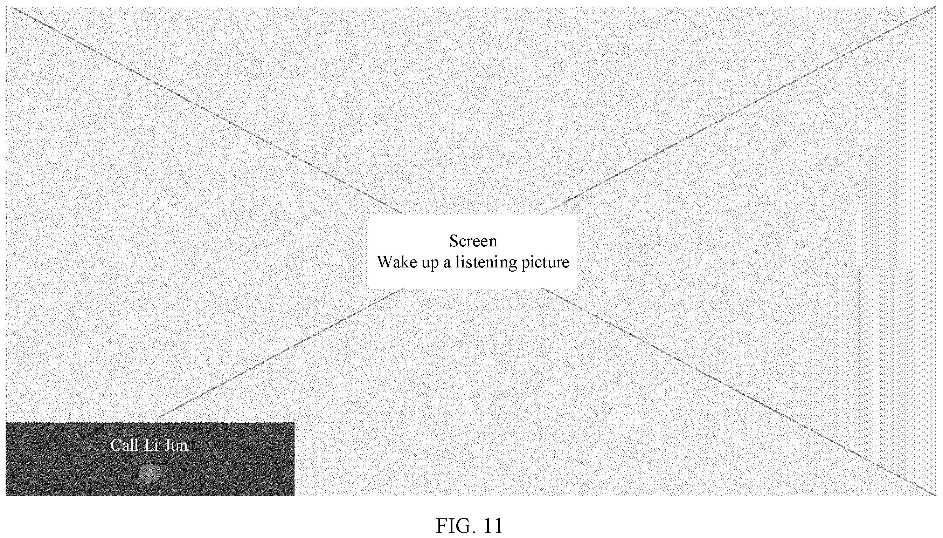

Optionally, FIG. 11 is a schematic diagram of the voice user interface in still another scenario according to Embodiment 3 of this application. As shown in FIG. 11, if there is only one "Li Jun" in a company, a call to Li Jun is directly made, and an interface of calling "Li Jun" is displayed.

This embodiment provides the voice user interface display method. When the user voice instruction is used to execute the conference control task after waking up the conference terminal, if the running result of the user voice instruction includes the plurality of candidates, the plurality of candidates are sorted based on the identity information of the user to generate the user interface information that matches the user. Therefore, the matching degree between the displayed candidate result and the user is improved, and user experience is improved.

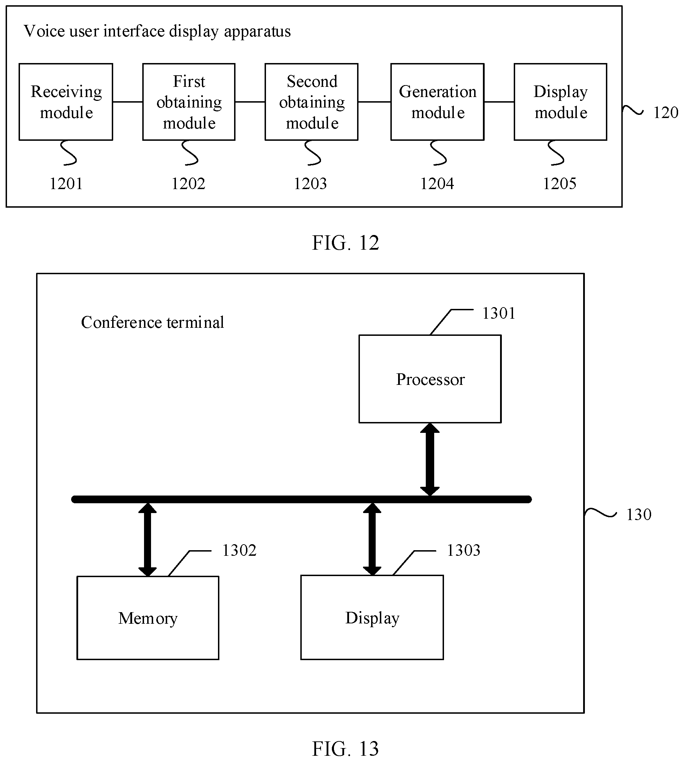

FIG. 12 is a schematic structural diagram of a voice user interface display apparatus according to an embodiment of this application. As shown in FIG. 12, a voice user interface display apparatus 120 provided in this embodiment may include a receiving module 1201, a first obtaining module 1202, a second obtaining module 1203, a generation module 1204, and a display module 1205.

The receiving module 1201 is configured to, when voice information input by a user into a conference terminal is received, collect a voice of the user, where the voice information includes a voice wakeup word or voice information starting with the voice wakeup word.

The first obtaining module 1202 is configured to obtain identity information of the user based on the voice of the user.

The second obtaining module 1203 is configured to obtain a user voice instruction based on the voice information.

The generation module 1204 is configured to generate user interface information that matches the user, based on the identity information of the user, a conference status of the conference terminal, and the user voice instruction.

The display module 1205 is configured to display the user interface information.

In a possible implementation, the user voice instruction is used to wake up the conference terminal, and the generation module 1204 includes:
a first determining unit, configured to determine a type of the user based on the conference status and the identity information of the user, where the type of the user is used to indicate a degree of familiarity of the user in completing a conference control task by inputting the voice information; and
a first generation unit, configured to, if the type of the user indicates that the user is a new user, generate conference operation prompt information and a voice input interface based on the conference status.

In a possible implementation, the generation module 1204 further includes:
a second generation unit, configured to, if the type of the user indicates that the user is an experienced user, generate the voice input interface.

In a possible implementation, if the conference status indicates that the user has joined a conference, the generation module 1204 further includes:
a first obtaining unit, configured to obtain role information of the user in the conference; and
the first generation unit is specifically configured to:
   generate the conference operation prompt information and the voice input interface based on the conference status and the role information.

In a possible implementation, the first determining unit includes:
a first obtaining subunit, configured to obtain a historical conference record of the user based on the identity information of the user, where the historical conference record includes at least one of the following data: latest occurrence time of different conference control tasks, a quantity of cumulative task usage times, and a task success rate; and
a determining subunit, configured to determine the type of the user based on the conference status and the historical conference record of the user.

In a possible implementation, the determining subunit is specifically configured to:
obtain data of at least one conference control task associated with the conference status in the historical conference record of the user; and
determine the type of the user based on the data of the at least one conference control task.

In a possible implementation, the determining subunit is specifically configured to:
for each conference control task, if data of the conference control task includes latest occurrence time, and a time interval between the latest occurrence time and current time is greater than or equal to a first preset threshold, and/or if data of the conference control task includes a quantity of cumulative task usage times, and the quantity of cumulative task usage times is less than or equal to a second preset threshold, and/or if data of the conference control task includes a task success rate, and the task success rate is less than or equal to a third preset threshold, determine that the user is a new user for the conference control task; or
for each conference control task, if at least one of latest occurrence time, a quantity of cumulative task usage times, and a task success rate that are included in data of the conference control task meets a corresponding preset condition, determine that the user is an experienced user for the conference control task, where a preset condition corresponding to the latest occurrence time is that a time interval between the latest occurrence time and current time is less than the first preset threshold, a preset condition corresponding to the quantity of cumulative task usage times is that the quantity of cumulative task usage times is greater than the second preset threshold, and a preset condition corresponding to the task success rate is that the task success rate is greater than the third preset threshold.

In a possible implementation, the user voice instruction is used to execute a conference control task after waking up the conference terminal, a running result of the user voice instruction includes a plurality of candidates, and the generation module 1204 includes:
a third generation unit, configured to sort the plurality of candidates based on the identity information of the user to generate the user interface information that matches the user.

In a possible implementation, the third generation unit includes:
a second obtaining subunit, configured to obtain a correlation between each candidate and the identity information of the user; and
a generation subunit, configured to sort the plurality of candidates based on the correlations to generate the user interface information that matches the user.

In a possible implementation, the second obtaining module 1203 is specifically configured to:
perform semantic understanding on the voice information to generate the user voice instruction;
or
send the voice information to a server; and
receive the user voice instruction sent by the server, where the user voice instruction is generated after the server performs semantic understanding on the voice information.

In a possible implementation, the receiving module 1201 is further configured to:
when the voice information input by the user into the conference terminal is received, collect a profile picture of the user; and
the first obtaining module 1202 is specifically configured to obtain the identity information of the user based on the voice and the profile picture of the user.

In a possible implementation, the first obtaining module 1202 includes:
a second determining unit, configured to determine a position of the user relative to the conference terminal based on the voice of the user;
a collection unit, configured to collect facial information of the user based on the position of the user relative to the conference terminal; and
a third determining unit, configured to determine the identity information of the user based on the facial information of the user and a facial information library.

In a possible implementation, the first obtaining module 1202 further includes:
a second obtaining unit, configured to obtain voiceprint information of the user based on the voice of the user; and
a fourth determining unit, configured to determine the identity information of the user based on the voiceprint information of the user and a voiceprint information library.

The voice user interface display apparatus provided in this embodiment of this application may be configured to perform the foregoing technical solutions in the voice user interface display method embodiments. Implementation principles and technical effects of the apparatus are similar to those of the method embodiments of this application. Details are not described herein again.

FIG. 13 is a schematic structural diagram of a conference terminal according to an embodiment of this application. As shown in FIG. 13, a conference terminal 130 provided in this embodiment may include a processor 1301, a memory 1302, and a display 1303.

The memory 1302 is configured to store program instructions.

The display 1303 is configured to display user interface information under control of the processor 1301.

The processor 1301 is configured to invoke and execute the program instructions stored in the memory 1302, and when the processor 1301 executes the program instructions stored in the memory 1302, the conference terminal is configured to perform the technical solutions in the voice user interface display method embodiments of this application. Implementation principles and technical effects of the conference terminal are similar to those of the method embodiments. Details are not described herein again.

It may be understood that FIG. 13 shows merely a simplified design of the conference terminal. In another implementation, the conference terminal may further include any quantity of transceivers, processors, memories, communications units, and/or the like. This is not limited in this embodiment of this application. In addition, the conference terminal may further include a functional unit such as a microphone, a loudspeaker, or a button.

An embodiment of this application further provides a chip system. The chip system includes a processor, and may further include a memory, configured to perform the foregoing technical solutions in the voice user interface display method embodiments of this application. Implementation principles and technical effects of the chip system are similar to those of the method embodiments. Details are not described herein again. The chip system may include a chip, or may include a chip and another discrete component.

An embodiment of this application further provides a program. When executed by a processor, the program is used to perform the foregoing technical solutions in the voice user interface display method embodiments of this application. Implementation principles and technical effects of the program are similar to those of the method embodiments. Details are not described herein again.

An embodiment of this application further provides a computer program product including instructions. When the computer program product is run on a computer, the computer is enabled to perform the foregoing technical solutions in the voice user interface display method embodiments of this application. Implementation principles and technical effects of the computer program product are similar to those of the method embodiments. Details are not described herein again.

An embodiment of this application further provides a computer-readable storage medium. The computer-readable storage medium stores instructions, and when the instructions are run on a computer, the computer is enabled to perform the foregoing technical solutions in the voice user interface display method embodiments of this application. Implementation principles and technical effects of the computer-readable storage medium are similar to those of the method embodiments. Details are not described herein again.

In the embodiments of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in the embodiments of this application. The general-purpose processor may be a microprocessor or any conventional processor or the like. The steps of the method disclosed with reference to the embodiments of this application may be directly performed by a hardware processor, or may be performed by using a combination of hardware in the processor and a software module.

In the embodiments of this application, the memory may be a non-volatile memory, such as a hard disk drive (hard disk drive, HDD) or a solid-state drive (solid-state drive, SSD), or may be a volatile memory (volatile memory), such as a random access memory (random-access memory, RAM). The memory is any other medium that can be used to carry or store expected program code in a form of an instruction or a data structure and that can be accessed by a computer. However, this is not limited thereto.

In the several embodiments provided in this application, it should be understood that the disclosed apparatus and method may be implemented in another manner. For example, the described apparatus embodiment is used as an example. For example, the unit division is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of hardware combined with a software functional unit.

A person of ordinary skill in the art may understand that sequence numbers of the foregoing processes do not mean execution sequences in various embodiments of this application. The execution sequences of the processes should be determined based on functions and internal logic of the processes, and should not constitute any limitation on the implementation processes of the embodiments of this application.

All or some of the foregoing embodiments may be implemented by using software, hardware, firmware, or any combination thereof. When software is used for implementation, all or some of the embodiments may be implemented in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium (for example, a solid-state disk (Solid-State Disk, SSD)).

## Claims

1. A voice user interface display method, comprising:
when voice information input by a user into a conference terminal is received, collecting a voice of the user, wherein the voice information comprises a voice wakeup word or voice information starting with the voice wakeup word;
obtaining identity information of the user based on the voice of the user;
obtaining a user voice instruction based on the voice information;
generating user interface information that matches the user, based on the identity information of the user, a conference status of the conference terminal, and the user voice instruction; and
displaying the user interface information.

2. The method according to claim 1, wherein the user voice instruction is used to wake up the conference terminal, and the generating user interface information that matches the user, based on the identity information of the user, a conference status of the conference terminal, and the user voice instruction comprises:
determining a type of the user based on the conference status and the identity information of the user, wherein the type of the user is used to indicate a degree of familiarity of the user in completing a conference control task by inputting the voice information; and
if the type of the user indicates that the user is a new user, generating conference operation prompt information and a voice input interface based on the conference status.

3. The method according to claim 2, further comprising:
if the type of the user indicates that the user is an experienced user, generating the voice input interface.

4. The method according to claim 2, wherein if the conference status indicates that the user has joined a conference, the method further comprises:
obtaining role information of the user in the conference; and
the generating conference operation prompt information and a voice input interface based on the conference status comprises:
generating the conference operation prompt information and the voice input interface based on the conference status and the role information.

5. The method according to any one of claims 2 to 4, wherein the determining a type of the user based on the conference status and the identity information of the user comprises:
obtaining a historical conference record of the user based on the identity information of the user, wherein the historical conference record comprises at least one of the following data: latest occurrence time of different conference control tasks, a quantity of cumulative task usage times, and a task success rate; and
determining the type of the user based on the conference status and the historical conference record of the user.

6. The method according to claim 5, wherein the determining the type of the user based on the conference status and the historical conference record of the user comprises:
obtaining data of at least one conference control task associated with the conference status in the historical conference record of the user; and
determining the type of the user based on the data of the at least one conference control task.

7. The method according to claim 6, the determining the type of the user based on the data of the at least one conference control task comprises:
for each conference control task, if data of the conference control task comprises latest occurrence time, and a time interval between the latest occurrence time and current time is greater than or equal to a first preset threshold, and/or if data of the conference control task comprises a quantity of cumulative task usage times, and the quantity of cumulative task usage times is less than or equal to a second preset threshold, and/or if data of the conference control task comprises a task success rate, and the task success rate is less than or equal to a third preset threshold, determining that the user is a new user for the conference control task; or
for each conference control task, if at least one of latest occurrence time, a quantity of cumulative task usage times, and a task success rate that are comprised in data of the conference control task meets a corresponding preset condition, determining that the user is an experienced user for the conference control task, wherein a preset condition corresponding to the latest occurrence time is that a time interval between the latest occurrence time and current time is less than the first preset threshold, a preset condition corresponding to the quantity of cumulative task usage times is that the quantity of cumulative task usage times is greater than the second preset threshold, and a preset condition corresponding to the task success rate is that the task success rate is greater than the third preset threshold.

8. The method according to claim 1, wherein the user voice instruction is used to execute a conference control task after waking up the conference terminal, a running result of the user voice instruction comprises a plurality of candidates, and the generating user interface information that matches the user, based on the identity information of the user, a conference status of the conference terminal, and the user voice instruction comprises:
sorting the plurality of candidates based on the identity information of the user to generate the user interface information that matches the user.

9. The method according to claim 8, wherein the sorting the plurality of candidates based on the identity information of the user to generate the user interface information that matches the user comprises:
obtaining a correlation between each candidate and the identity information of the user; and
sorting the plurality of candidates based on the correlations to generate the user interface information that matches the user.

10. The method according to any one of claims 1 to 9, wherein the obtaining a user voice instruction based on the voice information comprises:
performing semantic understanding on the voice information to generate the user voice instruction;
or
sending the voice information to a server; and
receiving the user voice instruction sent by the server, wherein the user voice instruction is generated after the server performs semantic understanding on the voice information.

11. The method according to any one of claims 1 to 10, further comprising:
when the voice information input by the user into the conference terminal is received, collecting a profile picture of the user; and
the obtaining identity information of the user based on the voice of the user comprises:
obtaining the identity information of the user based on the voice and the profile picture of the user.

12. The method according to claim 11, wherein the obtaining the identity information of the user based on the voice and the profile picture of the user comprises:
determining a position of the user relative to the conference terminal based on the voice of the user;
collecting facial information of the user based on the position of the user relative to the conference terminal; and
determining the identity information of the user based on the facial information of the user and a facial information library.

13. The method according to claim 12, wherein the obtaining the identity information of the user based on the voice and the profile picture of the user further comprises:
obtaining voiceprint information of the user based on the voice of the user; and
determining the identity information of the user based on the voiceprint information of the user and a voiceprint information library.

14. A conference terminal, comprising a processor, a memory, and a display, wherein
the memory is configured to store program instructions;
the display is configured to display user interface information under control of the processor; and
the processor is configured to invoke and execute the program instructions stored in the memory, and when the processor executes the program instructions stored in the memory, the conference terminal is configured to perform the method according to any one of claims 1 to 13.

15. A computer-readable storage medium, wherein the computer-readable storage medium stores instructions, and when the instructions are run on a computer, the computer is enabled to perform the method according to any one of claims 1 to 13.
